# NEUE EUROPÄISCHE PATENTSCHRIFT

(11) **EP 1 729 985 B2**
(45) Veröffentlichungstag und Bekanntmachung des Hinweises auf die Entscheidung über den Einspruch: **07.01.2015**
(45) Hinweis auf die Patenterteilung: 22.08.2007
(21) Anmeldenummer: 05826792.3
(22) Anmeldetag: 23.02.2005
(51) Int. Cl.: B60G 17/02

(54) **FAHRZEUGFAHRWERK**
VEHICLE CHASSIS
CHASSIS DE VEHICULE

(30) Priorität: 22.03.2004 DE 102004014336
(43) Veröffentlichungstag der Anmeldung: 13.12.2006
(73) Patentinhaber: ThyssenKrupp Bilstein GmbH, 58256 Ennepetal (DE)
(72) Erfinder: FEUCHTNER, Christian, 80469 München (DE); KRÜGER, Clemens, 85221 Dachau (DE)
(74) Vertreter: Adams, Steffen
(86) Internationale Anmeldenummer: PCT/EP2005/001852
(87) Internationale Veröffentlichungsnummer: WO 2006/018050

(56) Entgegenhaltungen:
- EP-A- 0 501 115
- EP-A- 0 741 051
- DE-A1- 1 934 984
- DE-A1- 3 831 338
- DE-A1- 10 122 542
- DE-A1- 10 345 987
- DE-B- 1 209 444
- DE-B3- 10 255 764
- DE-C- 934 332
- DE-C1- 10 101 694
- US-A- 380 651
- US-A- 3 598 422
- US-A- 4 111 407
- US-A1- 2004 036 206
- THE D. R. TEMPLEMAN COMPANY, - THE GENERAL WIRE SPRING COMPANY UND - ACE WIRE SPRING & FORM CO. INC.: 'INTERNETAUSZÜGE BEZUGLICH KONISCHE WENDELFEDERN'

## Beschreibung

Die Erfindung betrifft ein Fahrzeugfahrwerk nach dem Oberbegriff des Patentanspruchs 1.

Ein derartiges Fahrzeugfahrwerk ist z. B. aus der DE 10101694C1 bekannt. Hierbei ist der Antrieb, mit dem der Federteller axial verstellt werden kann, als Gewindespindel ausgebildet. Die Gewindespindel ist dabei zwischen einer Spindelmutter, welche als Rotor eines elektromagnetischen Antriebs ausgebildet ist und durch einen ringförmigen Stator bei dessen Beaufschlagung mit Strom rotatorisch bewegt wird, und einem Federteller mit einem dem Gewinde der Spindelmutter entsprechenden Außengewinde ausgebildet. Die Gewichtskraft des Fahrzeuges lastet auf dem Federteller und wird über diesen in die Gewindespindel eingeleitet, die wiederum ein Drehmoment auf die Spindelmutter ausübt. Dies erfolgt auch im Ruhezustand des Fahrzeugfahrwerks, in dem sich der Federteller in der sogenannten Konstruktionslage befindet. Dadurch wirkt durch die Gewichtskraft des Fahrzeugs auf die Spindelmutter ein permanentes Drehmoment ein, welches die Spindelmutter verdrehen und somit den Federteller verstellen würde, wenn ihm nicht entgegen gewirkt wird. Daher muss im Ruhezustand der Verstellantrieb mit einem permanenten Haltestrom beaufschlagt werden, der groß genug ist, um dem durch die Gewichtskraft des Fahrzeuges auf die Gewindespindel ausgeübten Drehmoment entgegenzuwirken und den Federteller in seiner Ruheposition (Konstruktionslage) zu halten.

Zwar wäre es theoretisch möglich, die Gewindespindel derartig selbsthemmend auszubilden, dass die Gewichtskraft des Fahrzeuges eine Selbsthemmung in der Gewindespindel erzeugt. Auf diese Weise könnte auf die permanente Erzeugung eines auf die Spindelmutter wirkenden Drehmomentes, welches dem durch die Gewichtskraft des Fahrzeugs auf die Gewindespindel einwirkenden Drehmoment entgegenwirkt, verzichtet werden. In der Praxis kann eine solche selbsthemmende Gewindespindel allerdings nicht realisiert werden, weil dann der Wirkungsgrad des Spindeltriebes zu gering wäre. Außerdem wäre ein Antrieb mit größerer Leistung erforderlich, um die gleiche Verstellleistung wie bei einem Spindeltrieb mit einem besseren Wirkungsgrad zu erhalten.

Der Erfindung liegt die Aufgabe zugrunde, ein Fahrzeugfahrwerk nach dem Oberbegriff des Patentanspruchs 1 derartig weiterzubilden, dass auf die permanente Einleitung von Energie (z.B. in Form eines Haltestroms) in den Verstellantrieb des Federtellers, insbesondere auch während des Ruhezustandes des Fahrzeugfahrwerks, verzichtet werden kann, so dass der Energieaufwand verringert wird. Dabei soll ebenfalls sichergestellt werden, dass die axiale Bauhöhe des Fahrzeugfahrwerks möglichst gering ist.

Diese Aufgabe wird bei einem Fahrzeugfahrwerk gemäß dem Oberbegriff des Patentanspruchs 1 dadurch gelöst, dass mindestens ein zwischen dem Fahrzeugaufbau und dem Federteller wirksamer Kraftspeicher vorgesehen ist, der die Gewichtskraft des Fahrzeugs aufnimmt.

Durch die erfindungsgemäße Aufnahme der Gewichtskraft des Fahrzeuges durch den Kraftspeicher wird erreicht, dass ein hinsichtlich seines Wirkungsgrades optimiertes Getriebe, wie z. B. ein Spindeltrieb ohne Selbsthemmungseigenschaften oder ein Planetenwälzgetriebe, verwendet werden kann, ohne dass im Ruhezustand des Fahrwerks Energie (Haltestrom) in den Verstellantrieb eingeleitet werden muss, um den Federteller in der vorgesehenen Ruheposition (Konstruktionslage) zu halten. Dadurch, dass der Kraftspeicher die Gewichtskraft des Fahrzeugs in der Konstruktionslage aufnimmt, wird das Getriebe (z.B. ein Spindeltrieb) von dieser Gewichtskraft entlastet. Diese Entlastung führt dazu, dass der Federteller in der Konstruktionslage (Ruhezustand des Fahrwerks) im Wesentlichen kraftfrei ist, denn auf den Federteller wirken zwei betragsmäßig gleich große und entgegengesetzt gerichtete Kräfte ein, die aus der Gewichtskraft des Fahrzeugs resultieren. Diese gleich großen, entgegengesetzt gerichteten Kräfte werden einerseits von der Aufbaufeder, andererseits von dem Kraftspeicher auf den Federteller übertragen. Dadurch befindet sich der Federteller in Konstruktionslage in einem Kräftegleichgewicht, sodass bei Stillstand oder ungestörter Geradeausfahrt des Kraftfahrzeugs ist kein Haltestrom erforderlich ist, mit dem der Federteller in der vorgesehenen Ruheposition gehalten wird.

Das Getriebe ist vorzugsweise als Spindeltrieb ausgeführt. Auf diese Weise lässt sich ein platzsparender und verlässlicher Stellantrieb für den Federteller realisieren. Hinsichtlich seiner Gewindesteigung kann der Spindeltrieb so ausgelegt werden, dass er einen optimalen Wirkungsgrad aufweist.

Erfindungsgemäß ist der Kraftspeicher als konische Wendelfeder ausgebildet. Eine solche konische Wendelfeder wird unter Druckvorspannung derartig in das Fahrzeugfahrwerk integriert, dass sie zwischen dem Fahrzeugaufbau und dem Federteller verspannt ist und wirksam wird. An ihrer einen Seite stützt sich die konische Wendelfeder gegen den Fahrzeugaufbau ab, während sie sich auf der anderen Seite gegen den Federteller abstützt. Die Feder ist dabei so dimensioniert und ausgelegt, dass sie die Gewichtskraft des Fahrzeugaufbaus aufnimmt und dabei um ein bestimmtes vorgegebenes Maß zusammengedrückt wird. Die Verwendung einer konischen Wendelfeder hat den Vorteil, dass insbesondere die axiale Bauhöhe des Fahrwerks gering gehalten werden kann, weil sich die Wendeln dieser Feder bei Zusammendrücken ineinanderschieben. Derartige Federn weisen daher ein sehr geringes Blockmaß auf.

In der Praxis hat es sich bewährt, als Antriebseinheit für die Verstellung des Federtellers einen elektromagnetischen Antrieb und einen von diesem angetriebenen Spindeltrieb zu verwenden. Der Antrieb umfasst einen ringförmigen Stator, der die Wicklungen einer elektromagnetischen Spule trägt, und einen Rotor, der ebenfalls ringförmig ausgebildet ist und von dem Stator zumindest teilweise umschlossen wird. In bekannter Weise übt der Stator, wenn er mit einem Strom beaufschlagt wird, ein Drehmoment auf den Rotor aus. Der ringförmige Rotor ist als Spindelmutter ausgebildet, d.h. er weist an seiner inneren Ringfläche Wälzkörper auf, die mit einem entsprechenden Außengewinde des Federtellers zusammenwirken, sodass ein Spindeltrieb (Kugelrollspindel) realisiert wird. Das Außengewinde kann vorteilhaft auf der Mantelfläche eines zylindrischen, sich in axialer Richtung erstreckenden Fortsatzes des Federtellers aufgebracht sein.

Vorteilhaft ist der Kraftspeicher, der die Gewichtskraft des Fahrzeugs aufnimmt, innerhalb eines Gehäuses angeordnet. Dabei stützt sich das Gehäuse mit seinem einen Ende gegenüber dem Fahrzeugaufbau ab, während es sich mit seinem anderen Ende direkt oder indirekt gegen den Federteller abstützt. Die Kolbenstange des Schwingungsdämpfers ist dabei über ein Dämpferlager mit dem sich am Fahrzeugaufbau abstützenden Gehäuseende verbunden. Bei einer derartigen eingehausten Anordnung des Kraftspeichers ist dieser, ebenso wie die Antriebseinheit, vor Verschmutzung und Spritzwasser geschützt, so dass eine erhöhte Funktionssicherheit der Anordnung erreicht wird.

Im Folgenden wird die Erfindung anhand einer Zeichnung näher erläutert. Im Einzelnen zeigen
- Fig. 1:: eine erste Ausführungsform der Erfindung, bei der der Kraftspeicher als konische Wendelfeder ausgebildet ist.
- Fig. 2:: die Ausführungsform gemäß Fig. 1, wobei sich der Federteller in einer maximalen Verstellposition befindet.

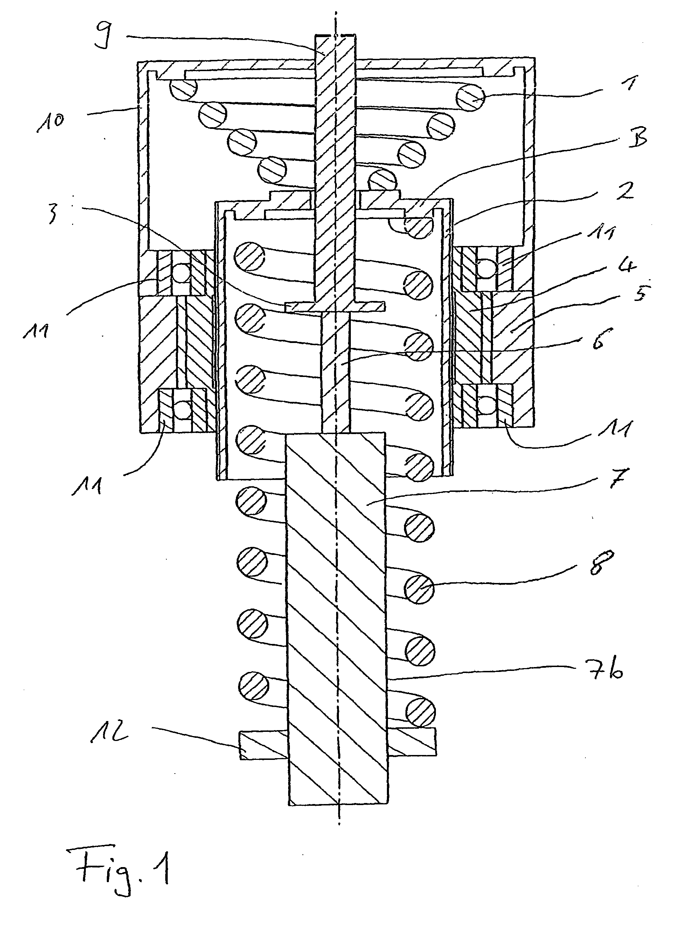

In Figur 1 ist ein Teil eines Fahrzeugfahrwerks dargestellt. Das Fahrzeugfahrwerk umfasst einen Schwingungsdämpfer 7 mit einem Dämpferrohr 7b und einer Kolbenstange 6. An der Kolbenstange 6 ist eine Kolbenstangenverlängerung 9 vorgesehen, die fest mit dem Gehäuse 10 verbunden ist. Die Kolbenstangenverlängerung 9 ist an den Fahrzeugaufbau angebunden. Sowohl der Schwingungsdämpfer 7 als auch die Kolbenstange 6 verlaufen zumindest bereichsweise innerhalb der Aufbaufeder 8, die als Wendelfeder ausgebildet ist. Die Aufbaufeder 8 ist in ihrem oberen Bereich von einem hülsenförmigen Federteller 2 umschlossen. Der Federteller 2 weist kopfseitig einen Boden B auf, der eine im Inneren des hülsenförmigen Federtellers 2 angeordnete innere Oberfläche und eine dieser gegenüberliegende äußere Oberfläche aufweist. Auf der inneren Oberfläche des Bodens B stützt sich das obere Ende der Aufbaufeder 8 ab. Auf der äußeren Oberfläche des Bodens B stützt sich dagegen mit ihrem einen Ende die als konische Wendelfeder ausgebildete Entlastungsfeder 1 ab, die sich mit ihrem anderen Ende wiederum an einer Innenfläche eines über die Kolbenstangenverlängerung 9 mit dem Fahrzeugaufbau verbundenen Gehäuses 10 abstützt.

Als Antrieb ist ein Stator 5 vorgesehen, der als elektromagnetische Spule ausgebildet ist. Dieser ringförmige Stator 5 umschließt einen als Spindelmutter ausgebildeten Rotor 4, welcher den Rotor des elektromagnetischen Antriebs bildet. Der Rotor 4 ist gegenüber dem Stator 5 über Kugellager 11 verdrehbar gelagert. Die zylindrische Innenfläche des Rotors 4 weist ein Innengewinde auf, so dass der Rotor 4 als Spindelmutter verwendbar ist. Auf dem Außenmantel des zylindrischen, sich in axialer Richtung erstreckenden Abschnitts des hülsenförmigen Federtellers 2 ist ein Außengewinde vorhanden, welches mit den (nicht dargestellten) Wälzkörpern der Spindelmutter 4 korrespondiert. Auf diese Weise bildet die Spindelmutter 4 mit dem Federteller 2 einen Spindeltrieb.

Das Gehäuse 10 stützt sich mit seinem in Fig. 1 oberen Ende gegenüber dem Fahrzeugaufbau ab, während es sich mit seinem in Fig. 1 unteren Ende an dem Stator 5 und damit indirekt am Federteller abstützt. Im Ruhezustand des Fahrzeugs bzw. bei ruhiger Geradeausfahrt wirkt die Gewichtskraft des Fahrzeugaufbaus über das Gehäuse 10 direkt auf die Entlastungsfeder 1, welche diese Gewichtskraft aufnimmt. Hierfür ist die Entlastungsfeder 1 entsprechend dimensioniert und ausgelegt.

Über die Entlastungsfeder 1 wird diese Gewichtskraft auf den Federteller 2 übertragen. Gegen den Federteller 2 stützt sich auf der der Entlastungsfeder gegenüber liegenden Seite die Aufbaufeder 8 mit ihrem oberen Ende ab, die sich wiederum mit ihrem unteren Ende gegen den fest mit dem Schwingungsdämpferrohr 7b verbundenen Federteller 12 abstützt. Die Aufbaufeder 8 nimmt somit in der Ruhelage (Konstruktionslage) ebenfalls die Gewichtskraft des Fahrzeugs auf. Auf diese Weise wirken in der Konstruktionslage auf den Federteller 2 zwei gleich große und entgegengesetzt gerichtete Kräfte ein, nämlich einerseits die Druckkraft der Entlastungsfeder 1 (die vom Fahrzeugaufbau weg gerichtet wirkt) und andererseits die der Aufbaufeder 8 (die zum Fahrzeugaufbau hin gerichtet wirkt). Hinsichtlich ihres Betrages sind diese Kräfte gleich groß. Dadurch wird der Federteller 2 in der Konstruktionslage in einem Kräftegleichgewicht gehalten. In dieser Lage wirkt keine ein Verstellmoment auf den Rotor 4 hervorrufende Kraft auf den Spindeltrieb ein, sodass es nicht erforderlich ist, einen Haltestrom in die Antriebseinheit 4, 5 einzuleiten, mit dem der Federteller in der Konstruktionslage gehalten wird. Somit kommt das erfindungsgemäße Fahrwerk mit einem geringeren Energieaufwand aus als die aus dem Stand der Technik bekannten Fahrwerke, bei denen ein entsprechender Haltestrom erforderlich ist.

Ausgehend von der Konstruktionslage (Ruhelage) kann die Spindelmutter 4 nun durch Beaufschlagung des Stators 5 mit Strom verdreht werden, sodass der Spindeltrieb wirksam wird. Dieser verstellt dann den Federteller in gewünschter und an sich bekannter Weise.

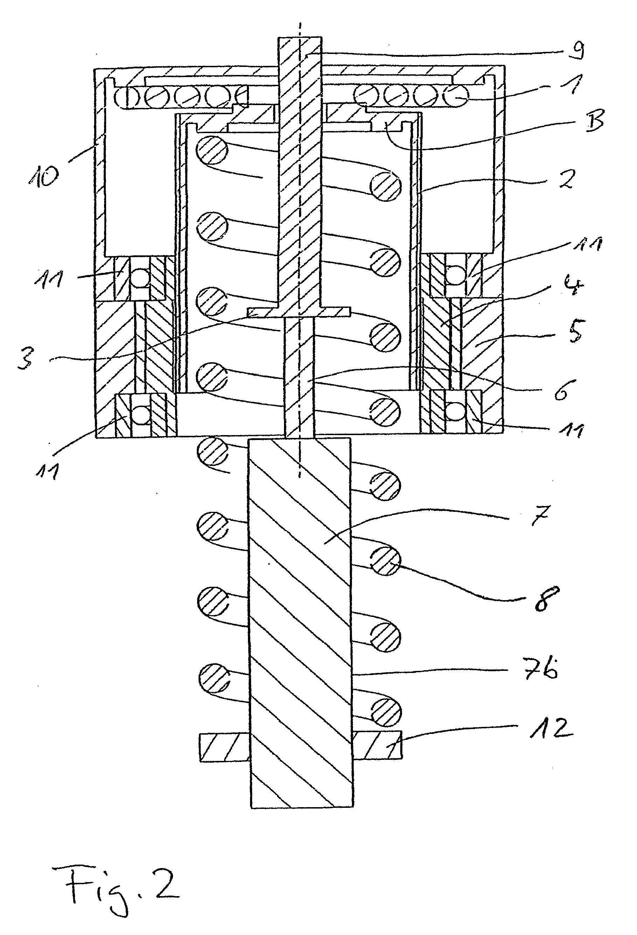

Fig. 2 zeigt das Fahrwerk gemäß Fi. 1 in einer gegenüber Fig. 1 anderen Verstellposition des Federtellers 2. In Fig. 2 ist der Federteller 2 in seine äußerste Verstellposition verfahren, wobei die Entlastungsfeder 1 maximal zusammengedrückt ist. Die einzelnen Wendeln der als konische Wendelfeder ausgebildeten Entlastungsfeder 1 sind in dieser Position ineinander geschoben, sodass das Blockmaß dieser Feder dem einfachen Drahtdurchmesser entspricht. Durch diese Bauweise wird eine besonders geringe axiale Bauhöhe der verstellbaren Federbeinanordnung und damit des Gesamtsystems des Fahrwerks erreicht.

Die erfindungsgemäßen aktiven Federbeinanordnungen beanspruchen nur eine geringfügig größere axiale Bauhöhe als passive Federbeinanordnungen. Mit der Erfindung wird es möglich, vorhandene passive Federbeine (d.h. also mit nicht verstellbaren Federtellern ausgestattete Federbeine) ohne weitere Umbaumaßnahmen durch aktive elektromechanische Federbeine zu ersetzen. Dadurch können z.B. Pkw mit herkömmlichen nichtaktiven Fahrwerken nachträglich entsprechend mit aktiven Fahrwerken ausgerüstet werden.

Es versteht sich, dass die erfindungsgemäße Lehre bei allen Federbeinen mit verstellbarem Federteller eingesetzt werden kann, bei denen die Antriebseinheit zum Verstellen des Federtellers so gestaltet ist, dass die Gewichtskraft des Fahrzeugaufbaus in der Konstruktionslage eine Kraft oder ein Drehmoment erzeugt, welche bzw. welches eine Verstellung des Federtellers bewirken würde und bei denen daher Energie (z.B. in Form eines Haltestroms) aufgewendet werden muss, um dieser unerwünschten Verstellung entgegen zu wirken. Insoweit sind die in den Figuren der Ausführungsbeispiele dargestellten, durch Innen- und Außengewinde gebildeten Spindeltriebe nur als Beispiele anzusehen. Das Getriebe könnte z.B. auch als Kugelrollspindel ausgebildet sein. Ebenso kann das Getriebe als Planetenwälzgetriebe ausgebildet sein. Auch sind andere elektromechanische oder hydraulische Antriebe als Verstellantrieb denkbar. Auch bei diesen Verstellantrieben kann die erfindungsgemäße Lehre erfolgreich eingesetzt werden.

### Bezugszeichenliste

- 1: Entlastungsfeder
- 2: Federteller
- 2a: Kragen
- 3: Dämpferanschlag
- 4: Rotor, Spindelmutter
- 5: Stator
- 6: Kolbenstange
- 7: Schwingungsdämpfer
- 7b: Dämpferrohr
- 8: Aufbaufeder
- 9: Kolbenstangenverlängerung
- 10: Gehäuse
- 11: Kugellager
- 12: Federteller
- B: Boden
- G: Getriebe

## Patentansprüche

1. Fahrzeugfahrwerk mit einem Federträger zur Abstützung einer zwischen zwei Federtellern (2, 12) verspannten Aufbaufeder (8) und einem eine Kolbenstange (6) und ein Dämpferrohr (7b) aufweisenden Schwingungsdämpfer (7), bei dem ein Bereich der Kolbenstange (6) und/oder des Dämpferrohres (7b) innerhalb der Aufbaufeder (8) angeordnet ist, wobei mindestens ein Federteller (2) mittels einer einen Antrieb (4, 5) und ein Getriebe (G) umfassenden Antriebseinheit axial verstellbar ist, wobei mindestens ein zwischen dem Fahrzeugaufbau und dem Federteller (2) wirksamer Kraftspeicher (1) vorgesehen ist, der die Gewichtskraft des Fahrzeugs aufnimmt, um die Antriebseinheit zu entlasten, und wobei der Kraftspeicher (1) eine Feder ist, die unter Druckvorspannung zwischen dem Fahrzeugaufbau und dem Federteller (2) verspannt ist, **dadurch gekennzeichnet, dass** die den Kraftspeicher (1) bildende Feder als konische Wendelfeder ausgebildet ist, deren Wendeln sich beim Zusammendrücken derart ineinander schieben, dass das Blockmaß dieser Feder dem einfachen Drahtdurchmesser entspricht.

2. Fahrzeugfahrwerk nach Anspruch 1, **dadurch gekennzeichnet, dass** das Getriebe (G) als Spindeltrieb ausgebildet ist.

3. Fahrzeugfahrwerk nach einem der Ansprüche 1 bis 2, **dadurch gekennzeichnet, dass** der Antrieb (4, 5) ein elektromagnetischer Antrieb ist, der einen ringförmigen Stator (5) und einen von diesem zumindest teilweise umschlossenen ringförmigen Rotor (4) umfasst.

4. Fahrzeugfahrwerk nach einem der Ansprüche 2 bis 3, **dadurch gekennzeichnet, dass** der Rotor (4) als Spindelmutter ausgebildet ist, die an ihrer inneren Ringfläche ein Innengewinde aufweist, welches mit einem an einem zylindrischen Fortsatz des Federtellers (2) vorhandenen Außengewinde zur Bildung des Spindeltriebes zusammenwirkt.

5. Fahrzeugfahrwerk nach Anspruch 4, **dadurch gekennzeichnet, dass** der Federteller (2) hülsenförmig ausgebildet und die Aufbaufeder (8) an ihrem fahrzeugaufbauseitigen Ende von dem hülsenförmig ausgebildeten Federteller (2) umschlossen ist, auf dessen Außenmantel ein Außengewinde vorhanden ist, welches mit der Spindelmutter (4) zur Bildung des Spindeltriebes zusammenwirkt.

6. Fahrzeugfahrwerk nach einem der Ansprüche 1 bis 5, **dadurch gekennzeichnet, dass** der Kraftspeicher (3) innerhalb eines Gehäuses (10) angeordnet ist, wobei das Gehäuse (10) sich mit seinem einen Ende am Fahrzeugaufbau und mit seinem anderen Ende am Stator (5) abstützt.

## Claims

1. Vehicle chassis having a spring bracket for supporting a body spring (8) which is clamped between two spring plates (2, 12), and having a vibration damper (7) which has a piston rod (6) and a damper pipe (7b), wherein a region of the piston rod (6) and/or of the damper pipe (7b) is disposed within the body spring (8), wherein at least one spring plate (2) can be adjusted axially by means of a drive unit comprising a drive (4, 5) and a transmission (G), wherein at least one force accumulator (1) acting between the vehicle body and the spring plate (2) is provided and absorbs the weight force of the vehicle in order to relieve the drive unit, and wherein the force accumulator (1) is a spring which is clamped under compressive prestressing between the vehicle structure and the spring plate (2), **characterised in that** the spring which forms the force accumulator (1) is formed as a conical helical spring the coils of which are pushed into one another during the compression in such a way that the block dimension of the said spring corresponds to the single wire diameter.

2. Vehicle chassis as claimed in claim 1, **characterised in that** the transmission (G) is formed as a spindle drive.

3. Vehicle chassis as claimed in either of claims 1 and 2, **characterised in that** the drive (4, 5) is an electromagnetic drive which has an annular stator (5) and an annular rotor (4) which is at least partially surrounded thereby.

4. Vehicle chassis as claimed in either of claims 2 and 3, **characterised in that** the rotor (4) is formed as a spindle nut which has an internal thread on its inner annular surface, which internal thread cooperates with an external thread, which is provided on a cylindrical extension of the spring plate (2), in order to form the spindle drive.

5. Vehicle chassis as claimed in claim 4, **characterised in that** the spring plate (2) is of sleeve-shaped configuration and the body spring (8) is enclosed at its end on the vehicle body side by the spring plate of sleeve-shaped configuration, on the outer shell of which there is an external thread which interacts with the spindle nut (4) to form the spindle drive.

6. Vehicle chassis as claimed in any one of claims 1 to 5, **characterised in that** the force accumulator (1) is disposed within a housing (10), wherein the housing (10) is supported with one of its ends on the vehicle body and with its other end on the stator (5).

## Revendications

1. Train de roulement avec un support de ressort pour supporter un ressort de caisse (8), contraint entre deux coupelles de ressort (2, 12), et un amortisseur (7) présentant une tige de piston (6) et un tube d'amortisseur (7b), dans lequel une section de la tige de piston (6) et/ou du tube d'amortisseur (7b) est agencée à l'intérieur du ressort de caisse (8), au moins une coupelle de ressort (2) pouvant être déplacée axialement au moyen d'une unité de commande comprenant un actionneur (4, 5) et une transmission (G), au moins un accumulateur d'énergie (1) actif entre la caisse du véhicule et la coupelle de ressort (2) étant prévu, lequel absorbe le poids du véhicule pour décharger l'unité de commande, et l'accumulateur d'énergie (1) étant un ressort, qui est contraint par précontrainte de compression entre la caisse du véhicule et la coupelle de ressort (2), **caractérisé en ce que** le ressort formant l'accumulateur d'énergie (1) est réalisé sous forme de ressort hélicoïdal conique dont les spires s'emboîtent les unes dans les autres lors de la compression, de telle sorte que la dimension à bloc de ce ressort corresponde au diamètre de fil simple.

2. Train de roulement selon la revendication 1, **caractérisé en ce que** la transmission (G) est réalisée sous forme de mécanisme à broche.

3. Train de roulement selon l'une des revendications 1 à 2, **caractérisé en ce que** l'actionneur (4, 5) est un actionneur électromagnétique qui comprend un stator annulaire (5) et un rotor annulaire (4) entouré, au moins partiellement, par celui-ci.

4. Train de roulement selon l'une des revendications 2 à 3, **caractérisé en ce que** le rotor (4) est réalisé sous la forme d'un écrou de broche qui présente, sur sa surface annulaire interne, un filetage interne qui coopère avec un filetage externe, prévu sur une saillie cylindrique de la coupelle de ressort (2), pour former le mécanisme à broche.

5. Train de roulement selon la revendication 4, **caractérisé en ce que** la coupelle de ressort (2) est réalisée en forme de douille et le ressort de caisse (8) est entouré, à son extrémité côté caisse du véhicule, par la coupelle de ressort (2) réalisée en forme de douille, sur l'enveloppe extérieure de laquelle est prévu un filetage externe qui coopère avec l'écrou de broche (4) pour former le mécanisme à broche.

6. Train de roulement selon l'une des revendications 1 à 5, **caractérisé en ce que** l'accumulateur d'énergie (1) est agencé à l'intérieur d'un logement (10), le logement (10) prenant appui, par l'une de ses extrémités, sur la caisse du véhicule et, par son autre extrémité, sur le stator (5).
